# EUROPÄISCHE PATENTSCHRIFT

(11) **EP 3 326 773 B1**
(45) Veröffentlichungstag und Bekanntmachung des Hinweises auf die Patenterteilung: **17.02.2021**
(21) Anmeldenummer: 17193608.1
(22) Anmeldetag: 28.09.2017
(51) Int. Cl.: B29C 35/04, B29D 30/06

(54) **VERFAHREN ZUR HERSTELLUNG EINES FAHRZEUGREIFENS UND FERTIGUNGSEINHEIT ZUR ANWENDUNG DES VERFAHRENS**
METHOD FOR MANUFACTURING A VEHICLE TYRE AND PRODUCTION UNIT FOR PERFORMING THE METHOD
PROCÉDÉ DE FABRICATION D'UN PNEUMATIQUE DE VÉHICULE ET UNITÉ DE FABRICATION PERMETTANT L'EXÉCUTION DU PROCÉDÉ

(30) Priorität: 29.11.2016 DE 102016223647
(43) Veröffentlichungstag der Anmeldung: 30.05.2018
(73) Patentinhaber: Continental Reifen Deutschland GmbH, 30165 Hannover (DE)
(72) Erfinder: Naik, Shreyas, 30173 Hannover (DE); Scifoni, Giuseppe, 30966 Hemmingen (DE); Schramm, Oliver, 31177 Harsum (DE); Wedekind, Horst, 30826 Garbsen (DE)
(74) Vertreter: Finger, Karsten

(56) Entgegenhaltungen:
- EP-A1- 2 447 030
- EP-A2- 0 467 314
- DE-A1-102009 043 940
- DE-C1- 3 437 628
- FR-A1- 3 026 043
- KR-A- 20040 042 132
- US-A- 3 608 624
- US-A- 4 490 325

## Beschreibung

Die Erfindung betrifft ein Verfahren zur Herstellung eines Fahrzeugreifens sowie eine Fertigungsanlage zur Anwendung des Verfahrens.

Die EP 2 447 030 A1 betrifft ganz allgemein ein Verfahren sowie eine Vorrichtung zur Herstellung eines vulkanisierten Fahrzeugreifens, bei dem der Reifenrohling zunächst in einem mit Gas befüllten Vulkanisierbehälter vulkanisiert wird und anschließend das Gas aus dem Innenraum des Vulkanisierbehälters abgesaugt wird. Das Absaugen des Gases kann dabei mittels einer Vakuumseinrichtung erfolgen.

In der FR 3 026 043 A1 wird eine Vulkanisiervorrichtung und ein Verfahren zum Vulkanisieren eines Fahrzeugreifens beschrieben, wobei die Vulkanisiervorrichtung den Hohlraum des Fahrzeugreifens beidseitig verschließt und über einen Zuführkanal und einen als Venturirohr ausgeführten Injecktor in den Hohlraum ein Gemisch aus Dampf und Druckgas eingebracht wird. Bei dem Druckgas kann es sich hierbei um Wasserdampf handeln, wobei zur Abführung des entstehenden Kondensats ferner ein Abflussrohr vorhanden ist.

Schließlich beschreibt die US 3 608 624 A allgemein ein System, bei dem heißes Wasser oder Wasserdampf unter hohem Druck in einen Hohlraum eines Vulkanisationswerkzeuges eingebracht wird, um definierte Bedingungen für die Herstellung des Fahrzeugreifens zu erzeugen. Während des Vulkanisationsverfahren zirkuliert das heiße Wasser beziehungsweise der Wasserdampf innerhalb des Vulkanisationswerkzeuges. Ein Kondensator dient der Trennung des Dampfers vom Wasser und der Rückgewinnung des dadurch abgeschiedenen Wassers zur erneuten Durchführung des Prozesses.

Ein spezielleres Verfahren zur Herstellung eines Fahrzeugreifens unter Verwendung eines Vulkanisationswerkzeuges ist bereits aus der DE 34 37 628 A1 bekannt. Während der Vulkanisation wird gemäß dem Offenbarungsgehalt der Druckschrift zur Ausbildung des nach der Fertigstellung des Fahrzeugreifens mit Luft befüllbaren Innenhohlraumes des Fahrzeugreifens ein in den Fahrzeugreifenrohling eingesetzter, elastisch verformbarer Formkörper mit einem unter Druck stehenden Gas gefüllt, bei dem es sich gemäß der DE 34 37 628 A1 um Stickstoff handelt. Im Anschluss an die Vulkanisation wird das Gas in einem ersten Entleerungsschritt aus dem Formkörper abgeführt, bis das Druckniveau in dem Formkörper etwa dem Normalluftdruck entspricht. In einem darauf folgenden Entleerungsschritt erfolgt mittels eines Vakuums die vollständige Abführung noch vorhandener Reste des Gases aus dem Formkörper, was infolge des Vakuums einem Absaugen entspricht.
Dieses, in der Herstellungspraxis von Fahrzeugreifen bisher eingesetzte Verfahren erfordert jedoch zwei getrennte Rohrleitungen, von denen eine für die Entleerung und die andere für das Vakuum genutzt werden. Dabei wird zunächst eine Dampf-Kondensat-Mischung aus dem Formkörper in ein Ablaufrohr entleert, um den ursprünglich im Formkörper noch vorhandenen Überdruck von etwa 12 bar auf Atmosphärendruck zu reduzieren. Nachdem der Druck in die Nähe des Atmosphärendrucks abgesenkt wurde, wird ein Vakuumventil geöffnet, um das verbleibende Kondensat aus dem Formkörper abzusaugen. Zur Erzeugung des benötigten Vakuums kommen gegenwärtig Vakuumpumpen zum Einsatz, bei denen es sich um Flüssigkeitsringpumpen handelt. Diese stellen einen Unterdruck von ungefähr 0,4 bis 0,9 bar bereit. Davon unabhängig ist es bereits bekannt, ein erzeugtes Vakuum in einem Vorratstank zu speichern. Die zuvor erwähnten Flüssigkeitsringpumpen benötigen für ihren Betrieb Energie und erzeugen zudem Anschaffungskosten sowie Unterhaltungskosten, die beispielsweise für die Wartung und Reparaturen entstehen. Ein wesentlicher Nachteil der bislang bekannten und im Einsatz befindlichen Vulkanisationswerkzeuge besteht ferner darin, dass beträchtliche Energiemengen benötigt werden, um die Vakuumpumpe und den Vorratstank zu kühlen.

Daraus ergeben sich insgesamt zu lange Entleerungszeiten des Formkörpers, hohe Energiekosten, eine zu kurze Lebensdauer des Formkörpers, da dieser mechanisch und thermisch erheblich belastet wird, hohe Investitionskosten und ein maßgeblicher Wartungsaufwand.

Der Erfindung liegt die Aufgabe zugrunde, ein Verfahren zur Herstellung eines Fahrzeugreifens unter Verwendung eines Vulkanisationswerkzeuges zu definieren, das mit möglichst einfachen Mitteln, mit verringertem Aufwand und mit reduzierten Kosten zu einer Verbesserung der Herstellung und einer Erhöhung der Zahl der produzierten Fahrzeugreifen führt. Zur Anwendung des Verfahrens sollte darüber hinaus eine Fertigungseinheit beschriebenen werden.

Die Erfindung löst diese Aufgabenstellung mit den Merkmalen der unabhängigen Patentansprüche 1 und 9.
Weitere Ausgestaltungen der Erfindung sind Gegenstand der sich jeweils anschließenden Unteransprüche.

Ein Verfahren zur Herstellung eines Fahrzeugreifens unter Verwendung eines Vulkanisationswerkzeuges, wobei während der Vulkanisation zur Ausbildung des nach der Fertigstellung des Fahrzeugreifens mit Luft befüllbaren Innenhohlraumes des Fahrzeugreifens ein in den Fahrzeugreifenrohling eingesetzter, elastisch verformbarer Formkörper mit einem unter Druck stehenden Gas gefüllt wird, das nach Beendigung der Vulkanisation in einem ersten Entleerungsschritt aus dem Formkörper abgeführt wird, bis das Druckniveau in dem Formkörper dem Normalluftdruck entspricht, um in einem darauf folgenden Entleerungsschritt mittels eines Vakuums noch vorhandene Reste des Gases vollständig aus dem Formkörper abzusaugen, wurde erfindungsgemäß dahingehend weitergebildet, dass zur Erzeugung des Vakuums eine Dampfkondensation mit einer Absenkung der Temperatur des Dampfes genutzt wird.

Die Erfindung geht damit einen vollkommen neuen Weg bei der Herstellung von Fahrzeugreifen. Durch den Einsatz einer an sich bekannten Dampfkondensation mit einer Temperaturabsenkung zur Erzeugung des Vakuums kann nämlich im Rahmen einer für die Herstellung eines Fahrzeugreifens geeigneten Fertigungseinheit eine kostenintensive Vakuumpumpe je Fertigungseinheit eingespart werden. Damit vereinfacht sich die zum Einsatz kommende Fertigungseinheit zur Herstellung eines Fahrzeugreifens erheblich, was zudem insgesamt die Fertigungskosten reduziert.
Der Unterdruck beziehungsweise das Vakuum wird erfindungsgemäß durch das Kondensieren von Wasserdampf erzeugt. Damit kann jedoch nicht nur eine Vakuumpumpe eingespart werden, sondern anstelle der eingangs genannten und bislang erforderlichen zwei Rohrleitungen für das Entleeren des Formkörpers und die Vakuumführung gibt es erfindungsgemäß nur noch ein einziges Strömungsleitungsrohr, das ständig mit Unterdruck beziehungsweise einem Vakuum beaufschlagt ist.
Daraus ergeben sich die entscheidenden Vorteile bei der Fahrzeugreifenherstellung, dass vorliegend weniger Zeit für die Erzeugung eines Fahrzeugreifens benötigt wird und damit eine höhere Effektivität gegeben ist. Dies resultiert daraus, dass sich der Formkörper durch das permanent anliegende Vakuum wesentlich schneller entleert, als dies bisher der Fall war. Zudem ergeben sich mit der Erfindung maßgebliche Energieeinsparungspotenziale und ein entscheidend geringerer Wartungsaufwand, da insgesamt durch die Vereinfachung der gesamten Fertigungseinheit zur Herstellung eines Fahrzeugreifens weniger bewegliche Teile benötigt werden benötigt werden, als bislang.

Besonders einfach umsetzbar ist die Erfindung dann, wenn gemäß einer ersten Ausgestaltung die Dampfkondensation eine Wasserdampfkondensation ist. Die thermodynamischen Reaktionsbedingungen von Wasserdampf sind verhältnismäßig einfach zu bestimmen und einzuhalten. Besondere Sicherheitsanforderungen müssen zudem beim Einsatz von Wasserdampf nicht erfüllt werden, so dass diese Maßnahme von maßgeblichen Vorteil für die Erfindung ist.

Wie zuvor bereits ausgeführt wurde, besteht eine andere Weiterbildung der Erfindung darin, dass lediglich ein einziges Strömungsleitungsrohr für die Entleerung des Formkörpers und das Bereitstellen des Vakuums genutzt wird. Damit weist dieses eine Doppelfunktion auf und es kann ein komplettes Rohrleitungssystem eingespart werden, was insgesamt zu einer erheblichen Vereinfachung der Fertigungseinheit zur Herstellung eines Fahrzeugreifens führt. An dieser Stelle ist anzumerken, dass eine Fertigungseinheit zur Herstellung von Fahrzeugreifen ein oder mehrere Vulkanisationswerkzeuge aufweisen kann. Dabei ist es von Bedeutung, dass die Erfindung für sämtliche Vulkanisationswerkzeuge anwendbar ist, wodurch die Effektivität der gesamten Produktion erheblich gesteigert werden kann.

Da sich das Vakuum in Vorratstanks speichern lässt, ist auch der energetische Aufwand zur Herstellung des Vakuums reduzierbar, da zunächst auf die vorhandenen Reserven zurückgegriffen werden kann. Insgesamt kann das Vakuum demnach nicht nur zur Entleerung des Formkörpers verwendet werden, sondern auch zum Entzug des infolge der Dampfkondensation ausfallenden Dampfkondensats. Das Dampfkondensat stellte bislang ein maßgebliches Problem bei der Fertigung dar, da die daraus resultierende Feuchtigkeit sich durch vorhandene Temperaturunterschiede ausbildete und mühevoll aus dem Vulkanisationswerkzeug entfernt werden musste. Durch den Einsatz des Vakuums lässt sich dieser Schritt maßgeblich vereinfachen.

Zudem kann entsprechend einem vorteilhaften Lösungsvorschlag nach der Erfindung das Dampfkondensat in einen Zyklon oder Fliehkraftabscheider abgeführt werden, der eine Trennung zwischen Flüssigkeit und Dampf erzeugt. Dies hat zur Folge, dass sowohl die Flüssigkeit optimal abgeführt wird und Flüssigkeit sowie der Dampf erneut zur Verfügung stehen. Insgesamt lassen sich somit erhebliche Einsparungspotenziale ausschöpfen, wobei die Herstellung eines Fahrzeugreifens weitgehend als geschlossenes System ausgebildet werden kann und dadurch insgesamt sehr energieeffizient funktioniert.

Zur Verbesserung der Kondensation geht ein weiterführender Vorschlag der Erfindung dahin, dass der abgeschiedene Dampf in einen Kondensator abgeführt und in den zudem Rückführungswasser eingesprüht wird. Das Rückführungswasser lässt sich aus einem Wärmetauscher gewinnen, der darüber hinaus einmal erzeugte Wärmeenergie einer erneuten Nutzung zuführt.

In dem erfindungsgemäßen System zur Herstellung eines Fahrzeugreifens gibt es nicht kondensierbare Anteile in dem zum Einsatz kommenden Dampf. Dies können entweder Festkörper oder Gase sein. Zu den Festkörpern gehören beispielsweise Verunreinigungen im Wasser, wie Kalk oder andere Ablagerungen und Bestandteile der Fahrzeugreifenherstellung. Zu deren Abscheidung dient ein Zyklon, während zur Abscheidung der Gase eine von Dampf angetriebene Strahlpumpe verwendet wird. Die Strahlpumpe dient dabei der Entfernung nicht kondensierbarer Gase innerhalb der Mischung und funktioniert nach dem Venturi-Prinzip. Sie erzeugt folglich einen Unterdruck und beschleunigt die Strömung.

Im Zuge der Energieeinsparungspotenziale der Erfindung ist es auch sinnvoll, eine Wärmerückgewinnung zu nutzen, um Wärmeenergie einzusparen. Wie bereits ausgeführt wurde, kommt hierfür wenigstens ein Wärmetauscher zum Einsatz der in die Fertigungseinheit integriert wird. Die einmal erzeugte Wärme geht damit nicht verloren, sondern ist mehrfach wiederverwendbar.

Eine Fertigungseinheit zur Anwendung des zuvor beschriebenen Verfahrens ist dadurch gekennzeichnet, dass die Fertigungseinheit ein Vulkanisationswerkzeug mit einem elastisch verformbaren Formkörper und lediglich ein einziges Strömungsleitungsrohr zur Befüllung und Entleerung des Formkörpers sowie eine Vakuumerzeugungseinheit zur Erzeugung des für die Entleerung des Formkörpers benötigten Vakuums durch Absenkung der Temperatur für eine Dampfkondensation, mit einem Zyklon oder Feuchtigkeitsabscheider, einem Kondensator und einem Wärmetauscher aufweist, wobei der Zyklon strömungsleitend mit dem Strömungsleitungsrohr und einem Sammelbehälter zur Aufnahme von Kondensat und Verunreinigungen verbunden ist.

Eine derartige Fertigungseinheit ist sehr einfach aufgebaut und ermöglicht damit Energie sparend sowie mit reduziertem Aufwand und verringerten Investitionen gegenüber bekannten Lösungen die Herstellung von Fahrzeugreifen.

Eine Ausgestaltung der Fertigungseinheit besteht darin, dass die Vakuumerzeugungseinheit zusätzlich eine Strahlpumpe umfasst. Die Strahlpumpe kann dabei zur Abführung nicht kondensierbarer Bestandteile des Wasserdampfes genutzt werden oder zusätzlich zur Verstärkung des Vakuums zum Einsatz kommen, was letztlich jedoch von der Zusammensetzung der gasförmigen Bestandteile des Wasserdampfes abhängt.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.
Es zeigt:
- Figur 1:: einen Schnitt durch eine vereinfachte Darstellung eines ausschnittsweise gezeigten Vulkanisationswerkzeuges,
- Figur 2: und: eine Fertigungseinheit zur Herstellung eines Fahrzeugreifens nach dem Stand der Technik
- Figur 3:: beispielhaft und im Vergleich eine erfindungsgemäße Fertigungseinheit zur Herstellung eines Fahrzeugreifens.

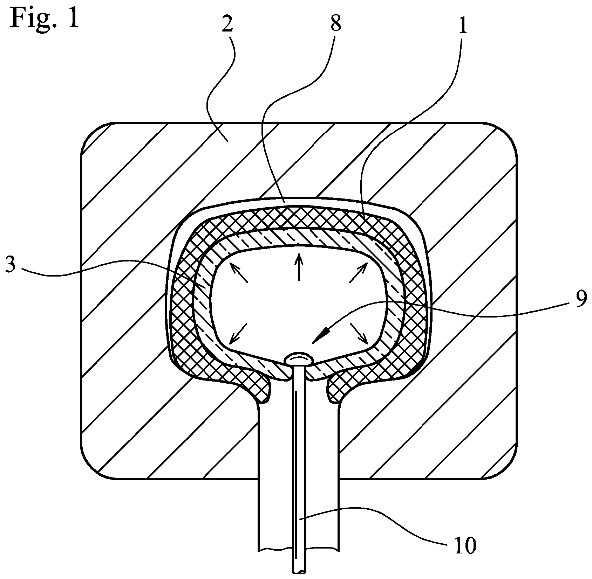

Die Figur 1 zeigt ausschnittsweise einen Schnitt durch eine vereinfachte Darstellung eines Vulkanisationswerkzeuges 2 zur Herstellung eines Fahrzeugreifens 1. Der hier dargestellte Rohling des Fahrzeugreifens 1 befindet sich in einem Hohlraum 8 des Vulkanisationswerkzeuges 2, der die negative Form des zu erzeugenden Fahrzeugreifens 1 bildet. In den nach der Fertigstellung des Fahrzeugreifens 1 mit Luft befüllbaren Innenhohlraum ist ein Formkörper 3 eingesetzt, der mit unter Druck stehendem Wasserdampf gefüllt wird. Der sich allseitig ausbreitende Druck innerhalb des Formkörpers 3 ist in der Figur 1 durch mehrere Pfeile symbolisiert. Zur Einbringung des unter Druck stehenden Wasserdampfes ist ein Ventil 9 vorhanden, das im vorliegenden Fall eine Zuführungsleitung 10 öffnet oder verschließt. Über die Zuführungsleitung 10 wird das zuvor erwähnte Gas in den Innenraum des Formkörpers 3 eingebracht und nach Fertigstellung des Fahrzeugreifens 1 wieder aus dem Formkörper 3 entfernt. Dieser grundsätzliche Aufbau eines Vulkanisationswerkzeuges 2 ist an sich bekannt. Neu ist hierbei, durch eine Dampfkondensation mit einer Temperaturabsenkung ein Vakuum zu erzeugen, das den in dem Hohlraum des Formkörpers 3 vorhandenen, gasförmigen Wasserdampf nach Fertigstellung des Fahrzeugreifens 1 vollständig aus dem Formkörper 3 entfernt.

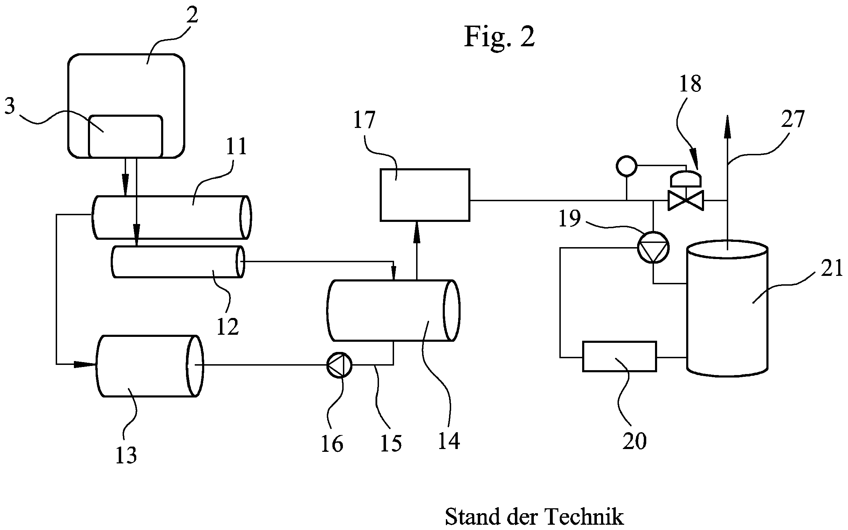

Eine aus dem Stand der Technik bekannte Fertigungseinheit zur Herstellung eines Fahrzeugreifens 1, geht aus der Darstellung in Figur 2 hervor. In dem Vulkanisationswerkzeug 2 befindet sich ein mit einem unter Druck stehenden Wasserdampf und/oder gegebenenfalls mit Gasen, wie Stickstoff, befüllbarer Formkörper 3, der in den Innenhohlraum des Fahrzeugreifens 1 eingesetzt ist. Das Vulkanisationswerkzeug 2 bildet ein erstes Kernstück der dargestellten Fertigungseinheit. Ein weiteres Kernstück der Fertigungseinheit besteht aus der Vakuumerzeugungseinheit zur Bereitstellung des für die Absaugung des Gases aus dem Formkörper 3 erforderlichen Wasserdampfes beziehungsweise Gases. Dieses Vakuum wird hierbei mittels aufwändiger Maßnahmen bereitgestellt. So ist zunächst eine Vakuumpumpe 19 erforderlich. Das mit der Vakuumpumpe 19 erzeugte Vakuum wird in einem Vakuumtank 14 gespeichert. Die Vakuumpumpe 19 erwärmt sich während ihres Betriebes und muss folglich mittels eines Pumpenkühlers 20 auf eine Betriebstemperatur gekühlt werden, was zusätzliche Energie erfordert. Auch die Kühlleistung für den Betrieb eines Vakuumkühlers 17 zur Kühlung des Vakuums ist bei der Gesamtenergiebilanz der in Figur 2 gezeigten, bekannten Fertigungseinheit zu berücksichtigen.
Ein Tank 21 dient hierbei als Puffer für die Abgabe des Gases an die Umgebung, was durch die Abführleitung 27 erfolgt und durch einen Pfeil angedeutet ist. Zur Regelung der Abgabemenge und des Volumenstromes der Vakuumpumpe 19 dient ein Zweiwegventil 18. Wie aus der Figur 2 deutlich wird, ist der Aufwand für die Erzeugung des Vakuums bei bekannten Fertigungseinheiten zur Herstellung eines Fahrzeugreifens 1 in einem Vulkanisationswerkzeug 2 verhältnismäßig hoch und energieintensiv.
Zur Abführung des in dem Formkörper 3 vorhandenen Gases dient bei der in Figur 2 gezeigten Fertigungseinheit eine Entleerungsleitung 11 sowie zum Abführen der noch verbliebenen Reste eine Vakuumleitung 12. Da bei der Entleerung des Formkörpers 3 auch Verunreinigungen entstehen, ist ein Sammelbehälter 13 für diese Verunreinigungen vorhanden, der in das Strömungsleitungssystem integriert und mit der Entleerungsleitung 12 verbunden ist. In der Leitung 15 ist darüber hinaus eine Pumpe 16 angeordnet, so dass die Entleerung des Vakuumtanks 14 möglich ist.

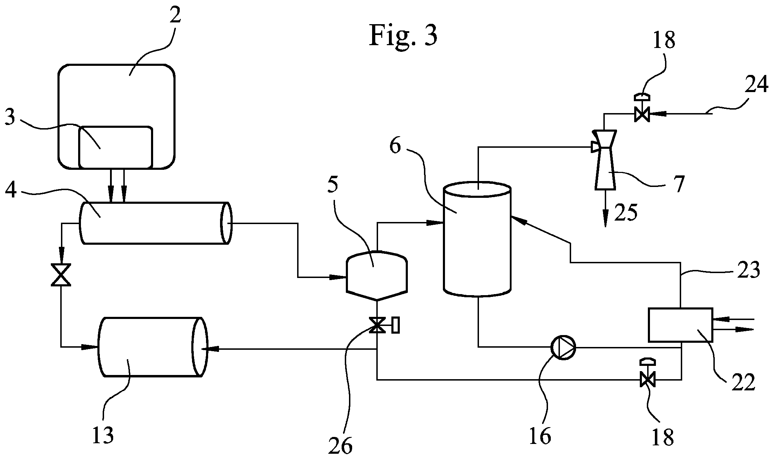

Im Unterschied zu der Darstellung in Figur 2 wird in der Figur 3 eine erfindungsgemäße Fertigungseinheit gezeigt. Hierbei ist zu beachten, dass nicht mehr eine Entleerungsleitung 11 und eine zusätzliche Vakuumleitung 12 zum Einsatz kommen, sondern lediglich ein kombiniertes Strömungsleitungsrohr 4, das für die Entleerung des Formkörpers 3 genutzt wird.
Wesentlicher Bestandteil dieser Fertigungseinheit ist eine Vakuumserzeugungseinheit, die vorliegend das Strömungsleitungsrohr 4 speist. Das Dampfkondensat wird hierbei in einen Zyklon 5, also in einen Fliehkraftabscheider, geführt, in dem die flüssigen Bestandteile des Dampfkondensats von dem Wasserdampf abgeschieden werden. Von hier aus gelangt der Wasserdampf in einen Kondensator 6, in den Rückführungswasser aus dem Wärmetauscher 22 über die Strömungsleitung 23 eingesprüht wird, um ein effektives Kondensieren zu gewährleisten. Das Dampfkondensat wird (indirekt) auch zur Wärmerückgewinnung verwendet. Ein zum Einsatz kommender, in der Figur 3 nicht gezeigter Filter wird darüber hinaus dazu verwendet, eine Beschädigung am Wärmetauscher 22 aufgrund von Verschmutzungen zu verhindern. Bei den erwähnten Verschmutzungen handelt es sich hauptsächlich um Kautschuk-Partikel. Die nicht kondensierbaren Gasanteile, die -anteilig etwa 5% ausmachen, werden von einer Strahlpumpe 7 entfernt, die ihrerseits von Wasserdampf bei etwa 3 bar angetrieben wird. Die Abführung dieser Gasanteile erfolgt über die Abflussleitung 25 an der Strahlpumpe 7. Der Zyklon 5 ist unter Zwischenschaltung eines Ventils 26 strömungsleitend an einen Sammelbehälter 13 gekoppelt, in dem verunreinigtes Kondensat gesammelt und dem System entnommen wird. Der Strahlpumpe 7 wird darüber hinaus über die Dampfzuführleitung 24 Wasserdampf zugeführt, sodass ihr Betrieb gewährleistet ist. Zur Aufrechterhaltung einer Strömung innerhalb der Vakuumerzeugungseinheit steht zudem eine Pumpe 16 zur Verfügung. Die Strömungsführung lässt sich zudem über mehrere Zwei- oder Mehrwegeventile 18 steuern. Auch in das erfindungsgemäße Strömungssystem ist ein Sammelbehälter 13 für Verunreinigungen integriert.
Der Druck innerhalb des Formkörpers 3 wird erfindungsgemäß in einer sehr kurzen Zeit von 0 erhöht und für eine bestimmte Zeit auf dem hohen Niveau gehalten, was der Herstellungszeit des Fahrzeugreifens 1 in dem Vulkanisationswerkzeug 2 entspricht. Im Anschluss daran wird der Druck in dem Formkörper 2 über das Strömungsleitungsrohr 4 in zwei Stufen zunächst bis auf den atmosphärischen Luftdruck und danach bis auf einen Unterdruck, also bis zu einem Vakuum abgebaut, wobei das Vakuum stets über das Strömungsleitungsrohr 4 zur Verfügung gestellt ist. Dies hat zur Folge, dass der Druck innerhalb des Formkörpers 3 bis unter den Normalluftdruck absinkt, so dass dadurch auch die letzten noch im Formkörper 3 verbliebenen Reste des Wasserdampfes beziehungsweise der Feuchtigkeit aus dem Formkörper 3 entfernt werden.

### Bezugszeichenliste

- 1: Fahrzeugreifen
- 2: Vulkanisationswerkzeug
- 3: Formkörper
- 4: Strömungsleitungsrohr
- 5: Zyklon
- 6: Kondensator
- 7: Strahlpumpe
- 8: Hohlraum
- 9: Ventil
- 10: Zuführungsleitung (zum Strömungsleitungsrohr)
- 11: Entleerungsleitung
- 12: Vakuumleitung
- 13: Sammelbehälter
- 14: Vakuumtank
- 15: Leitung
- 16: Pumpe
- 17: Vakuumkühler
- 18: Zweiwegeventil
- 19: Vakuumpumpe
- 20: Pumpenkühler
- 21: Tank
- 22: Wärmetauscher
- 23: Strömungsleitung
- 24: Dampfzuführleitung
- 25: Abflussleitung
- 26: Ventil
- 27: Abführleitung

## Patentansprüche

1. Verfahren zur Herstellung eines Fahrzeugreifens (1) unter Verwendung eines Vulkanisationswerkzeuges (2), wobei während der Vulkanisation zur Ausbildung des nach der Fertigstellung des Fahrzeugreifens (1) mit Luft befüllbaren Innenhohlraumes des Fahrzeugreifens (1) ein in den Fahrzeugreifenrohling eingesetzter, elastisch verformbarer Formkörper (3) mit einem unter Druck stehenden Gas gefüllt wird, das nach Beendigung der Vulkanisation in einem ersten Entleerungsschritt aus dem Formkörper (3) abgeführt wird, bis das Druckniveau in dem Formkörper (3) dem Normalluftdruck entspricht, um in einem darauf folgenden Entleerungsschritt mittels eines Vakuums noch vorhandene Reste des Gases vollständig aus dem Formkörper (3) abzusaugen,
**dadurch gekennzeichnet, dass**
zur Erzeugung des Vakuums eine Dampfkondensation mit einer Absenkung der Temperatur des Dampfes genutzt wird.

2. Verfahren nach Anspruch 1,
**dadurch gekennzeichnet, dass**
die Dampfkondensation eine Wasserdampfkondensation ist.

3. Verfahren nach einem der vorstehend genannten Ansprüche,
**dadurch gekennzeichnet, dass**
lediglich ein einziges Strömungsleitungsrohr (4) für die Entleerung des Formkörpers (3) und das Bereitstellen des Vakuums genutzt wird.

4. Verfahren nach einem der vorstehend genannten Ansprüche,
**dadurch gekennzeichnet, dass**
das Vakuum auch zum Entzug des infolge der Dampfkondensation ausfallenden Dampfkondensats genutzt wird.

5. Verfahren nach Anspruch 4,
**dadurch gekennzeichnet, dass**
das Dampfkondensat in einen Zyklon (5) oder Fliehkraftabscheider abgeführt wird, der eine Trennung zwischen Flüssigkeit und Dampf erzeugt.

6. Verfahren nach Anspruch 5,
**dadurch gekennzeichnet, dass**
der abgeschiedene Dampf in einen Kondensator (6) abgeführt wird, in den Rückführungswasser eingesprüht wird, um die Kondensation zu verbessern.

7. Verfahren nach einem der vorstehend genannten Ansprüche,
**dadurch gekennzeichnet, dass**
eine von Dampf angetriebene Strahlpumpe (7) für die Entfernung nicht kondensierbarer Anteile des Dampfes nach dem Venturi-Prinzip eingesetzt wird.

8. Verfahren nach einem der vorstehend genannten Ansprüche,
**dadurch gekennzeichnet, dass**
eine Wärmerückgewinnung genutzt wird, um Wärmeenergie einzusparen.

9. Fertigungseinheit zur Anwendung des Verfahrens nach einem der vorstehend genannten Ansprüche,
**dadurch gekennzeichnet, dass**
die Fertigungseinheit ein Vulkanisationswerkzeug (2) mit einem elastisch verformbaren Formkörper (3) und lediglich ein einziges Strömungsleitungsrohr (4) zur Entleerung des Formkörpers (3) sowie eine Vakuumerzeugungseinheit zur Erzeugung des für die Entleerung des Formkörpers (3) benötigten Vakuums durch Absenkung der Temperatur für eine Dampfkondensation, mit einem Zyklon oder Feuchtigkeitsabscheider (5) zur Trennung der Flüssigkeit von dem Dampf, einem Kondensator (6), in den der abgeschiedene Dampf abgeführt wird und einem Wärmetauscher (22) aufweist, wobei der Zyklon (5) strömungsleitend mit dem Strömungsleitungsrohr (4) und einem Sammelbehälter (13) zur Aufnahme von Kondensat und Verunreinigungen verbunden ist.

10. Fertigungseinheit nach Anspruch 9,
**dadurch gekennzeichnet, dass**
die Vakuumerzeugungseinheit zusätzlich eine Strahlpumpe (7) umfasst.

## Claims

1. Method for manufacturing a vehicle tyre (1) using a vulcanizing mould (2), wherein, during the vulcanization, to form the hollow space inside the vehicle tyre (1) that can be filled with air after completion of the vehicle tyre (1), an elastically deformable moulding (3) that is inserted into the green vehicle tyre is filled with a pressurized gas, which, after ending vulcanization, in a first emptying step is discharged from the moulding (3) until the pressure level in the moulding (3) corresponds to normal air pressure, in order in a then-following emptying step to extract remains of the gas that are still present completely from the moulding (3) by means of a vacuum,
**characterized in that**
a steam condensation involving lowering of the temperature of the steam is used to generate the vacuum.

2. Method according to Claim 1,
**characterized in that**
the steam condensation is a water-vapour condensation.

3. Method according to one of the preceding claims,
**characterized in that**
just a single flow pipe (4) is used for emptying the moulding (3) and providing the vacuum.

4. Method according to one of the preceding claims,
**characterized in that**
the vacuum is also used for extracting the steam condensate precipitating as a result of the steam condensation.

5. Method according to Claim 4,
**characterized in that**
the steam condensate is discharged into a cyclone (5) or centrifugal separator, which produces a separation between liquid and vapour.

6. Method according to Claim 5,
**characterized in that**
the separated vapour is discharged into a condenser (6), into which return water is sprayed in order to improve the condensation.

7. Method according to one of the preceding claims,
**characterized in that**
a jet pump (7) driven by steam is used for the removal of non-condensable components of the steam on the basis of the Venturi principle.

8. Method according to one of the preceding claims,
**characterized in that**
heat recovery is used in order to save thermal energy.

9. Production unit for performing the method according to one of the preceding claims,
**characterized in that**
the production unit has a vulcanizing mould (2) with an elastically deformable moulding (3) and just a single flow pipe (4) for emptying the moulding (3) and also a vacuum generating unit for generating the vacuum required for emptying the moulding (3) by lowering the temperature for steam condensation, with a cyclone or moisture separator (5) for separating the liquid from the vapour, a condenser (6), into which the separated vapour is discharged, and a heat exchanger (22), wherein the cyclone (5) is connected in a flow-conducting manner to the flow pipe (4) and a collecting container (13) for receiving condensate and contaminants.

10. Production unit according to Claim 9,
**characterized in that**
the vacuum generating unit additionally comprises a jet pump (7) .

## Revendications

1. Procédé de fabrication d'un pneumatique de véhicule (1) en utilisant un outil de vulcanisation (2), dans lequel, pendant la vulcanisation, pour réaliser la cavité intérieure du pneumatique de véhicule (1) pouvant être remplie d'air après achèvement du pneumatique de véhicule (1), un corps moulé (3) élastiquement déformable, inséré dans le pneu cru, est rempli d'un gaz sous pression qui est évacué du corps moulé (3) à la fin de la vulcanisation dans une première étape de vidange jusqu'à ce que le niveau de pression dans le corps moulé (3) corresponde à la pression atmosphérique, afin d'aspirer complètement des restes du gaz encore présents du corps moulé (3) au moyen d'un vide, dans une étape de vidange consécutive,
**caractérisé en ce qu'**une condensation de vapeur avec abaissement de la température de la vapeur est utilisée pour créer le vide.

2. Procédé selon la revendication 1, **caractérisé en ce que** la condensation de vapeur est une condensation de vapeur d'eau.

3. Procédé selon l'une quelconque des revendications précédentes, **caractérisé en ce qu'**une seule conduite d'écoulement (4) est utilisée pour la vidange du corps moulé (3) et la fourniture du vide.

4. Procédé selon l'une quelconque des revendications précédentes, **caractérisé en ce que** le vide est également utilisé pour retirer le condensat de vapeur qui se forme suite à la condensation de vapeur.

5. Procédé selon la revendication 4, **caractérisé en ce que** le condensat de vapeur est évacué dans un cyclone (5) ou un séparateur centrifuge qui provoque une séparation entre le liquide et la vapeur.

6. Procédé selon la revendication 5, **caractérisé en ce que** la vapeur déposée est évacuée dans un condensateur (6) dans lequel de l'eau de recyclage est vaporisée pour améliorer la condensation.

7. Procédé selon l'une quelconque des revendications précédentes, **caractérisé en ce qu'**une pompe à jet (7) entraînée à la vapeur est mise en œuvre pour éliminer des parties non condensables de la vapeur selon le principe de Venturi.

8. Procédé selon l'une quelconque des revendications précédentes, **caractérisé en ce qu'**une récupération thermique est utilisée pour économiser de l'énergie thermique.

9. Unité de fabrication destinée à l'application du procédé selon l'une quelconque des revendications précédentes,
**caractérisée en ce que** l'unité de fabrication présente un outil de vulcanisation (2) doté d'un corps moulé (3) élastiquement déformable, et une seule conduite d'écoulement (4) pour vider le corps moulé (3), ainsi qu'une unité de création de vide pour créer le vide nécessaire à la vidange du corps moulé (3) par abaissement de la température pour une condensation de vapeur, avec un cyclone ou un séparateur d'humidité (5) pour séparer le liquide de la vapeur, un condensateur (6) dans lequel la vapeur déposée est évacuée, et un échangeur thermique (22), le cyclone (5) étant relié de manière fluidique à la conduite d'écoulement (4) et à un récipient collecteur (13) pour recevoir du condensat et des impuretés.

10. Unité de fabrication selon la revendication 9, **caractérisée en ce que** l'unité de création de vide comprend en outre une pompe à jet (7).
